# EUROPEAN PATENT APPLICATION

(11) **EP 3 266 682 A2**
(43) Date of publication of application: **10.01.2018**
(21) Application number: 17179441.5
(22) Date of filing: 03.07.2017
(51) Int. Cl.: B62D 21/14, B62D 21/20, B62D 53/06, B62D 53/08, B60P 1/64, B62D 63/06

(54) **A TRAILER FOR USE IN ROAD HAULAGE**

(30) Priority: 04.07.2016 NL 2017092
(71) Applicant: HFM Patenten B.V., 9728 VP Groningen (NL)
(72) Inventor: HOFMA, Gerrit Frits, 9724 AK Groningen (NL)
(74) Representative: Janssen, Paulus J. P.

(57) **Abstract**

The present invention pertains to a trailer for road haulage, the trailer comprising a main frame having two parallel main frame beams being transversely connected, the main frame having at its leading end a means for connecting the trailer to a towing vehicle, and at is trailing end a wheeled sub-frame, comprising two parallel sub-frame beams that correspond to the respective main frame beams, the sub-frame supporting the main frame movably above a road surface, wherein the wheeled sub-frame is slidably connected to the main frame to enable extension of the trailer to accommodate freight of various sizes, wherein the slidable connection comprises multiple guiding wheels to guide the sub-frame beams with respect to the main frame beams.

## Description

### FIELD OF THE INVENTION

The present invention pertains to a trailer for road haulage, the trailer comprising a main frame having two parallel main frame beams being transversely connected, the main frame having at its leading end a means for connecting the trailer to a towing vehicle, and at is trailing end a wheeled sub-frame, comprising two parallel sub-frame beams that correspond to the respective main frame beams, the sub-frame supporting the main frame movably above a road surface, wherein the wheeled sub-frame is slidably connected to the main frame to enable extension of the trailer to accommodate freight of various sizes, wherein the slidable connection comprises multiple guiding wheels to guide the sub-frame beams with respect to the main frame beams.

### BACKGROND ART

Trailers for use in road haulage exist in many forms. Common features of all trailers are a supporting frame (for supporting load, often containers) that comprises two substantially parallel main beams which are transversely connected, and one or more wheeled axles for allowing road haulage of the frame. One of the used types of trailer is a so-called semi-trailer, which is a trailer without a front axle (as opposed to for example a full trailer having front and trailing end axles). A large proportion of its weight is supported by a road tractor, a detachable front axle assembly known as a dolly, or the tail of another trailer. A semi-trailer is normally equipped with landing gear (legs which can be lowered) to support it when it is uncoupled. A common type of semi-trailer is the one where the wheels are present on an (or more) axle(s) sub-frame that is slidably connected to the main frame at its trailing end. The sub-frame can be slided outwardly to extend the length of the trailer to accommodate freight of various sizes. Typically the sub-frame has a basic construction that corresponds to the basic construction of the main frame, *i.e.* a construction that comprises two substantially parallel beams, transversely connected. The wheeled axle or axles are mechanically connected to this sub-frame. Such a semi-trailer is for example known from EP 2669147 and EP 2374699.

The towing vehicle may be any vehicle such as a truck, lorry, dolly or other vehicle. In most cases the towing vehicle is a truck or road tractor. A road tractor coupled to a semi-trailer is often called a semi-trailer truck, simply "semi", or an articulated lorry (in particular in the UK). Various connecting means for connecting the trailer to the tractor are known. Nowadays, the tractor typically comprises a so-called Fifth Wheel which connects to a semi-trailer Kingpin. Kingpins come in many guises, but a typical market size is the 2.0" (50.8mm) EEC approved type. This Kingpin is fully interchangeable and given strict maintenance is adhered to, it should last the life of a trailer. The fifth-wheel coupling provides the link between a semi-trailer and the towing truck, tractor unit, leading trailer or dolly. The surface of the semi-trailer (with the kingpin at the center) rotates against the surface of the fixed Fifth Wheel, which does not rotate. To reduce friction, grease is applied to the surface of the Fifth Wheel. The configuration is sometimes called a turn-table in Australia and New Zealand, especially if it is a rotating ball-race-bearing type. The advantage of this coupling is improved towing stability.

In Australian English, the tractor unit is usually referred to as a prime-mover; and the combination of a prime-mover and trailer is known as a semi-trailer or semi. Semi-trailers with two trailer units are B-Doubles or road trains. A B-double consists of a prime mover towing two semi-trailers, where the first semi-trailer is connected to the prime mover by a fifth wheel coupling and the second semi-trailer is connected to the first semi-trailer by a fifth wheel coupling. A road train means a combination, other than a B-Double, consisting of a motor vehicle towing at least two trailers (counting as a single trailer) or a converter dolly supporting at least one semi-trailer.

In road haulage, semi-trailers predominate over full-trailers because of their flexibility. However, semi-trailers and other trailers have disadvantages, the most predominant ones being that a rigid truck can be used without a trailer, whereas a trailer has no use on its own, a tractor-trailer composition is more likely to jack knife because the trailer weighs significantly more than the tractor and, regarding a semi-trailer, since this trailer rests on top of a tractor it has a higher centre of gravity which makes it more prone to tipping than a rigid vehicle.

In the European Union, the maximum length for goods vehicles is set by an EC directive and is limited to 16.5 meters for articulated vehicles and 18.75 meters for full-trailer combinations. The directive does not set an absolute weight limit but specifies certain limits which, if met, guarantee free circulation of vehicles within the EU. The harmonised maximum weight for international transport is 40 tonnes. The cargo capacity of combinations for container transport can also be expressed in so-called twenty-feet equivalence units (TEU's) which stands for the equivalent of a standard 20 ft long container.

For domestic transport some countries, even within the EU, permit longer and heavier goods vehicles with more than one articulation, or are at least considering such permission. For example, vehicles weighing up to 60 tonnes and up to 25.25 meters long, which can accommodate three TEU, are allowed in some countries. In the Netherlands, the directorate of the office for road traffic has issued a rule of policy for an exemption on the restrictions allowing such longer and heavier goods vehicles (abbreviated "LHV" or in Dutch "LZV"). However, such exemptions are typically applicable to particular roads only. This complicates the logistics and planning of transportation involving the use of LHV's and limits advantages of the semi-trailer in general and LHV in particular.

### OBJECT OF THE INVENTION

It is an object of the invention to provide a trailer, in particular a semi-trailer allowing a versatile use.

### SUMMARY OF THE INVENTION

In order to meet the object of the invention, a trailer has been devised wherein each main frame beam has rotatably connected thereto at least two interdistant guiding wheels positioned at different guiding sites along the length of the respective main frame beam, wherein each sub-frame beam has an upper and lower guiding surface for guiding contact with the guiding wheels and wherein at each guiding site at most one guiding wheel is present rotatably engaging the respective guiding surfaces of the corresponding sub-frame beam of the wheeled sub-frame.

Although in the art it is common to use two guiding wheels at each guiding site, one engaging the upper part of the moving beam and the other engaging the lower part of the moving beam, applicant found that the construction can be made less complicated by using only one guiding wheel per site. It was thought that this would not be possible since the one wheel would be forced to rotate in one direction by engaging the lower part of the moving beam and force to rotate in a counter direction by engaging the upper part of the moving beam. Still, applicant found that by suing two guiding wheels in line (at interdistant positions along the length of the beam) and by connecting the guiding wheels rotatably to the main frame beams, the sliding engagement can be advantageously arrived at. In hindsight, this arrangement resembles the wheeled guidance of a drawer in a kitchen closet, simple but effective.

In its second aspect, the trailer comprises a main frame having two parallel main frame beams being transversely connected, the main frame having at its leading end a Kingpin for connecting the trailer to a Fifth Wheel of a towing vehicle, wherein the Kingpin is movable with respect to the main frame in longitudinal direction, wherein the Kingpin is movable by being part of a sub-chassis which is operatively connected to the main frame to be able and slide along a predetermined length of the main frame (optionally using the same sliding arrangement of the first aspect of the invention), wherein the main frame beams along the said length have a mutual distance that is smaller than the width of the Fifth Wheel of the towing vehicle. Although movable Kingpin arrangements are known in the art, in particular arrangements that use sub-chassis that slide in between the main frame beams, these construction al rely on very heavy sub-chassis structures. This is necessary since the load on the trailer is passed via the sub-chassis to the Fifth Wheel of the towing vehicle. Applicant now found a new way to have the Kingpin movable using a sub-chassis, according to which way the sub-chassis can remain relatively light of construction. By having the main beams of the main frame (which includes at least parts of these beams, which parts are rigidly connected to the main frame beams, such as for example parallel sub-frame beams welded to the main frame beams) running at such a distance that they will be supported by the Fifth Wheel, the sub-chassis may remain light of construction. This means that either the main beams run at this short lateral distance over their entire length, but advantageously, they converge at the front end of the trailer (for example by introducing S-curves in the two main beams). The trailer according to this aspect of the invention can be very advantageously used in combination with the wheeled sub-frame as described here above. In particular, when the sub-frame is slided completely inwardly, this provides the option of moving the King Pin forward to avoid mechanical interference. Given the fact that the main beams at the front end of this trailer run relatively close to each other, the usual vertical supporting leg(s) to support the trailer when the towing vehicle is uncoupled, are advantageously provided on the wheeled sub-frame instead of on the main frame.

In its third aspect, a trailer that meets the object of the invention has a main frame that comprises laterally extending arms for supporting freight, each wheel is provided with a fender, and each fender has a top part cutaway to prevent overlaps in height with the arms for supporting freight to enable extending of the trailer without the fenders bumping against the arms, the sub-frame at the position of the axle, for each wheel of the axle, is provided with a sheet-like member that can hinge with respect to the sub-frame beam between a first position wherein the member is positioned between the sub-frame beams and a second positon wherein the member is placed in lieu of the top part cutaway from the fender corresponding to the wheel. It is common to have fenders with cutaway top parts in order to prevent interference between the fenders and the supporting arms. However, legislation in many cases prescribes full fenders during haulage. In order to solve this, separate fender covers are often positioned manually and connected to the remaining fender parts with tape, bolts or other mechanical connections. Downside is that this takes a relative large amount of time (and therefore is often not done at all) and that these separate parts may easily be lost during haulage. Applicant found that a full fender can be provided more easily by having a hinged sheet like member that can be hinged (automatically or manually) onto the fender in need thereof. Advantageously the sheet-like element is secured to a hinged sub-beam, of which sub-beam a top plane coincides with a top plane of a main frame beam when the sheet-like element is in the second position. This way, during transport the fender can be closed, and at the same time the top surface of the hinted sub-beam can be used to support load in cooperation with the supporting function of the main frame beams.

In its fourth aspect, a trailer that meets the object of the invention has a main frame having two parallel main frame beams being transversely connected, the main frame having at its leading end a means for connecting the trailer to a towing vehicle, and at is trailing end a wheeled sub-frame, comprising two parallel sub-frame beams that correspond to the respective main frame beams, the sub-frame supporting the main frame movably above a road surface, wherein the wheeled sub-frame is slidably connected to the main frame to enable extension of the trailer to accommodate freight of various sizes, wherein the sub-frame is provided with a trailing end bumper which bumper is slidably connected to the sub-frame to enable extension of the bumper to accommodate freight of various sizes, is characterised in that the rear bumper is slidable when the freight is supported on the rear bumper. According to this aspect, the rear bumper may be movable when the load (a container) is not supported on the wheeled sub-frame, but on the main frame and the rear bumper. This way, the rear bumper, together with the load can be translated with respect to the wheeled sub-frame. Typically the rear bumper is translated using a pneumatic or hydraulic cylinder, or toothed bar in combination with a crank. In both cases the adjustment needs actuation of the cylinder or crank. It is recognised that it is desirable to introduce an option wherein the rear bumper can be moved without actuating the cylinder or crank. This is particularly useful when the bumper needs adjustment while the trailer is blocked for movement (parked for example). By having a free-wheel option for the adjustment means, the rear bumper could be translated, for example using a truck or other towing vehicle, without being counteracted by the cylinder or crank. When using a cylinder, this could be done by (temporarily) removing the pneumatic/hydraulic medium (air/oil) from the cylinder (e.g. into a reservoir), and in case of a crank this can be done by providing the crank with a common mechanical free-wheel option. These options together are designated to be a free-wheel option in the sense of the present invention.

In its fifth aspect, a trailer that meets the object of the invention has a main frame having two parallel main frame beams being transversely connected, the main frame having at its leading end a means for connecting the trailer to a towing vehicle, and at is trailing end a wheeled sub-frame, comprising two parallel sub-frame beams that correspond to the respective main frame beams, wherein the wheeled sub-frame is slidably connected to the main frame to enable extension of the trailer, wherein the sliding mechanism comprises on each main frame beam a rotatably connected guiding wheel for guiding contact with each sub-frame beam, wherein the sub-frame is slidable when freight is supported by the main frame, wherein the sub-frame is provided on each sub-frame beam with a lateral extension, the lateral extensions being situated upstream of the wheels of the sub-frame (i.e. at the towing side) to support freight, the lateral extensions optionally being provided with twist locks (optionally having two separate locking means to accommodate two different types of containers) to secure the freight and being mechanically connected in transverse direction by a transverse connection beam. This transverse connection beam is situated at a level below the main frame beams to enable free sliding of the sub-frame with respect to the main frame.

Each invention according to each aspect can be used on its own, or combined with any other aspect.

### EMBODIMENTS

In a first embodiment of the trailer according to the invention at least two of the four guiding wheels at the guiding sites of the two main frame beams are flanged wheels, the flanges restricting the lateral movement of the corresponding sub-frame beam. A common problem of the current type of trailer is that the beams of the sub-frame that are spaced in a sliding arrangement are prone to torsion which may prevent a smooth sliding of the sub-frame with respect to the main frame. A common solution is to use more rigid beams, but this simply means that the beams are made heavier, of thicker steel. This increases costs and weight. Applicant found that the simple introduction of flanges with at least two of the four guiding wheels, preferably one flanged guiding wheel per main frame beam, the flanges being arranged to restrict lateral movement of the sub-frame beams, may suffice to prevent hindering torsion of the sub-frame beams (depending i.a. on the use of the trailer, its common load, the type of road etc.). This means that the sub-frame beams may be provided as less heavy beams. In a further embodiment the at least two guiding wheels comprise the trailing end guiding wheel of the first main beam and the trailing end guiding wheel of the second main frame beam.

In another embodiment wherein each sub-frame beam has an upper and lower guiding surface for guiding contact with a guiding wheel, the lower guiding surface is stabilised with a rigid overlay surface, the rigid overlay surface being part of an angled section profile (which can be any profile such as a L-profile, H-profile, U-profile, J-profile etc. as long as there are at least two intersecting parts as opposed to a merely flat, 2-dimensional plate like structure), which profile fittingly engages the sub-frame beam underneath the lower guiding surface. As explained here above, torsion and possibly other mechanical distortions of the sub-frame beams is a common problem with this type of trailer. The common solution of providing heavy beams, although technically adequate, is not very advantageous from an economic point of view, both from a point of costs for producing the trailer and costs for using the trailer (a heavier trailer is less economic to use in haulage). Applicant now found that when overlaying the sub-frame beam (directly) underneath the lower guiding surface with a rigid surface that is part of an angled section profile, inadvertent torsion or other mechanical distortions of the sub-frame beams can be prevented or at least decreased, despite the fact that the overlay surface may be a relatively thin section profile, for example made of 1-3 mm thick iron plate. Although it is recognised that given the fact that the angled section profile is folded, this will increase to the resistance against torsion, the reason for the effect is not 100% clear, given the fact that a relatively thin section profile has such a large effect against any mechanical distortion of the (heavy) beams. But in any case, the fact that the overlay surface is part of an angled section profile is essential. A simply overlay ribbon for example (a flat strip or bar), either when positioned on the lower guiding surface or when positioned underneath this surface, will not have the same positive effect on the prevention of mechanical distortion of the sub-frame beams. In a further embodiment the rigid overlay surface is at least present at a site where the respective guiding wheel resides during haulage of the trailer. Apparently, the largest reason for inducing on torsion of the sub-frame beams is the force induced by the guiding wheels on these beams during haulage. By positioning the overlay surface exactly at those locations where the guiding wheels are residing during haulage may thus suffice in providing the required resistance against torsion. In yet a further embodiment the angled section profile is part of a transverse connecting member connecting the two sub-frame beams. Not only does this increase the resistance against torsion even further, it also saves material needed to manufacture the trailer. In still a further embodiment the transverse connecting member is mechanically connected to a wheeled axle via a leaf spring. This combines a third mode of action in the transverse connection member next to the actual transverse connection of the beams and the resistance against torsion. In yet another embodiment in the angled section profile is part of a rigid connection piece (in particular a so-called hanger bracket, in Dutch: "asbok") to mechanically connect a wheeled axle to the sub-frame. In still another embodiment the main frame hase at its leading end a Kingpin for connecting the trailer to a Fifth Wheel of a towing vehicle, wherein the Kingpin is movable with respect to the main frame in longitudinal direction, wherein the Kingpin is movable by being part of a sub-chassis which is operatively connected to the main frame to be able and slide along a predetermined length of the main frame, wherein the main frame beams along the said length have a mutual distance that is smaller than the width of the Fifth Wheel of the towing vehicle.

In another embodiment of the invention according to its third aspect, the sub-frame is provided with s stop member that has a height and lateral position that overlaps with an arm for supporting freight, to restrict extension of the trailer to a position wherein at most the said axle can be slided beyond the arms. This appears to be a convenient way to prevent that any optional further axle can be moved beyond the supporting arm when extending the trailer, by sliding the sub-frame outwardly. In particular when the further axles have wheels with full fenders (potentially interfering with the supporting arms), this is advantageous to prevent damage to the fenders. This could mean however that the extension of the trailer is restricted and less than its theoretical maximum given the length of the sub-frame. In a further embodiment of such a trailer therefore, the arms for supporting freight are movably connected to the main frame beams to enable removing or taking a position in which they do not interfere with any of the full fenders upon extension of the trailer wherein the second axle passes the original position of the supporting arms.

The invention will now be explained in more detail using the following specific examples.

### EXAMPLES

Figure 1 schematically shows a sliding arrangement for frames as known in the art.
Figure 2 schematically shows the basic outline of a sliding arrangement according to the invention.
Figure 3 schematically shows various spatial configurations of a beam of a wheeled frame that is slidably arranged with respect to a beam of a main frame.
Figure 4 schematically shows the application of a rigid overlay surface for a beam of the sub-frame.
Figure 5 schematically shows a movable King Pin arrangement as known from the art.
Figure 6 schematically shows a movable King Pin arrangement according to the invention.
Figure 7 and Figure 8 show an arrangement with a hinged sheet-like member that may close an open fender, according to another aspect of the invention.
Figure 9 schematically shows a slidable subframe for use with a trailer according to the invention.

### Figure 1

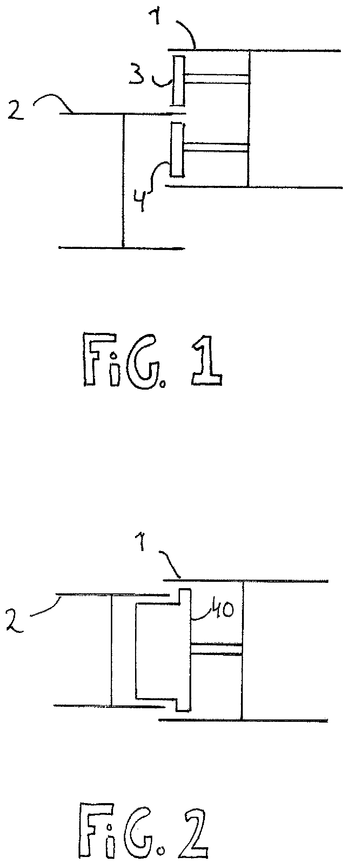

Figure 1 schematically shows a sliding arrangement for frames as known in the art. Commonly known in the art, and not further elaborated upon, nor exemplified in detail in any of the figures is a semi-trailer that comprises a main frame having two parallel main frame beams being transversely connected, the main frame having at its leading end a means for connecting the trailer to a towing vehicle, and at is trailing end a wheeled sub-frame, comprising two parallel sub-frame beams that correspond to the respective main frame beams, wherein the wheeled sub-frame is slidably connected to the main frame to enable extension of the semi-trailer to accommodate freight of various sizes. Such a trailer is for example described in detail in EP 2669147 and EP 2374699. In practice the slidable connection comprises multiple guiding wheels to guide the sub-frame beams with respect to the main frame beams. Figure 1 is a rear view of the sliding arrangement between the main frame H-beam 1 and the sub-frame beam 2. For smooth sliding with respect to each other, the main beam 1 is provided with two guiding wheels 3 and 4, which wheels are in contact with an upper section of the sub-frame beam 2. When moving this sub-frame beam by sliding it with respect to the main frame beam, the wheels steadily guide and support the sub-frame beam.

### Figure 2

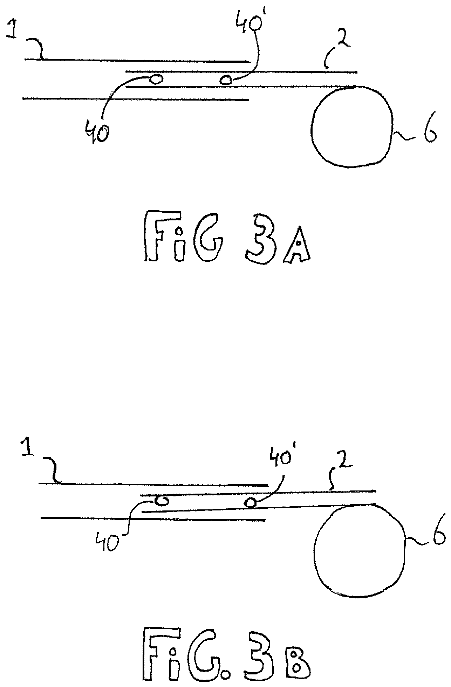

Figure 2 schematically shows the basic outline of a sliding arrangement according to the invention, in a rear view comparable as that used in Figure 1. In this embodiment, each main frame beam 1 (of which only one beam is depicted in figure 2) has rotatably connected thereto at least two interdistant guiding wheels 40 positioned at different guiding sites along the length of the respective main frame beam. One of these wheels 40 is shown in figure 2. Figure 3 shows the complete set-up of the wheels for one beam. The gist of the invention is that at each guiding site (i.e. at each site at which the sub-frame beam is guided and supported by a guiding wheel), as shown in figure 2, at most one wheel is present rotatably engaging the respective sub-frame beam of the wheeled sub-frame. This way the sub-frame beam 2 can slide with respect to the main frame beam 1 like a drawer in a kitchen closet.

In this particular embodiment at least two of the four guiding wheels at the guiding sites of the two main frame beams are flanged wheels (as indicated in figure 2), the flanges restricting the lateral movement of the corresponding sub-frame beam. Preferably, at least the two trailing end guiding wheels (each guide wheel of each beam) are flanged wheels.

### Figure 3

Figure 3, composed of sub-figures 3A and 3B, schematically shows various spatial configurations of a beam 2 of a wheeled frame (the wheel 6 is indicated) that is slidably arranged with respect to a beam 1 of a main frame. In figure 3A, the beams run perfectly parallel. In this configuration, the sub-frame beam will push against the lower part of the guiding wheels 40 and 40' when the semi-trailer carries load. The upper parts of the wheels are then free of contact with the sub-frame beam 2. This means that the wheels 40 and 40' can freely rotate when the sub-frame beam 2 slides with respect to the main frame beam 1.
In the configuration of figure 3A, the two beams cross each other over a slight angle (simulating a situation wherein a lot of load is centered right above the guiding wheels 40 and 40'). Also in this case the wheels can freely rotate when the sub-frame beam is slided with respect to the main frame beam. This can be understood as follows. In respect of the front end wheel 40, the sub-frame beam 1 will be pushed against the top side of the wheel. The lower side will run free from the sub-frame beam 2. For wheel 40' the situation is the other way around: the sub-frame beam will push against the lower side of the wheel, whereas the upper side of wheel 40' will run free from the sub-frame beam 2. This way, the sliding arrangement will remain free-running under all circumstances.

### Figure 4

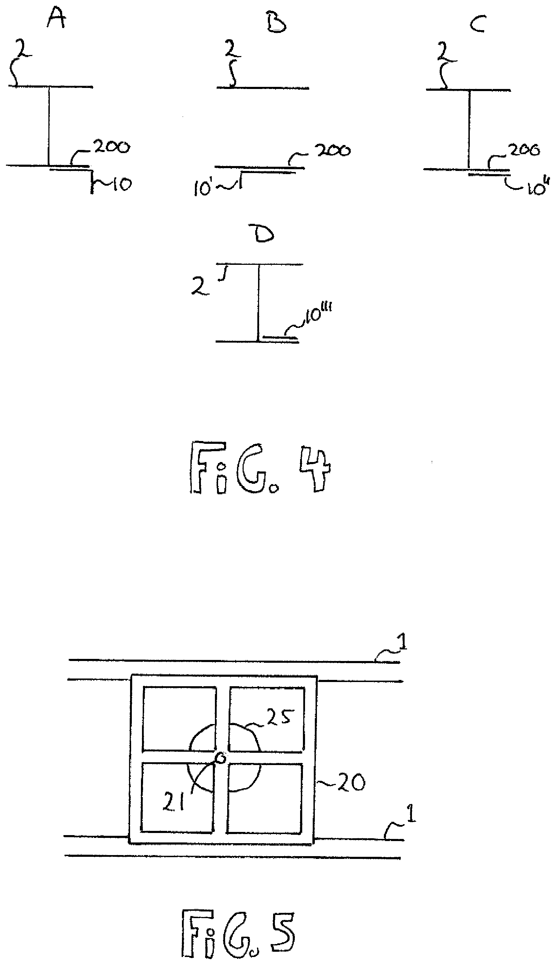

Figure 4, comprising sub-figures 4A through 4D, schematically shows the application of a rigid overlay surface 10 for a beam of the sub-frame. As can be understood from the configurations shown in figures 1 to 3 each sub-frame beam has an upper and lower guiding surface (corresponding to upper and lower parts of the guiding wheels) for guiding contact with a guiding wheel. It was found advantageous to stabilise the lower guiding surface 200 of the beam with a rigid overlay surface, the rigid overlay surface being part of an angled section profile, which profile fittingly engages the sub-frame beam underneath the lower guiding surface. Examples of such rigid overlays are provided in figures 4A and 4B. In figure 4A, which shows a sub-frame beam in cross-section, a first angled overlay surface 10 is depicted. In figure 4B, which shows a sub-frame beam in a side view, another type of angled overlay profile 10 is shown. Using these rigid overlay surfaces at least at a site where the respective guiding wheel resides during haulage of the semi-trailer, excessive mechanical distortion (e.g. leading to wear) of the sub-frame beam can be prevented, decreased or at least postponed significantly. Such wear cannot be prevented as good when applying an overlay surface as shown in figures 4C and 4D, *i.e.* an overlay surface that is not part of an angled section profile, but simply applied underneath (position of rigid overlay surface 10" as shown in figure 4C) or on top of (position of rigid overlay surface 10''' as shown in figure 4B) of the lower guiding surface 200. In an embodiment (not shown) the angled section profile is part of a transverse connecting member connecting the two sub-frame beams. Preferably, the transverse connecting member is mechanically connected to a wheeled axle via a leaf spring.

### Figure 5

Figure 5 schematically shows a movable King Pin arrangement as known from the art. In this arrangement, the movable King Pin 21 is provided on a sub-chassis 20 that is slidably arranged with respect to the main frame beams 1 and 1'. This way, the King Pin can be moved to cooperate with the Fifth Wheel 25, allowing some variation in the spatial relationship between this Fifth Wheel and the main frame (thus between the towing vehicle and the semi-trailer)

### Figure 6

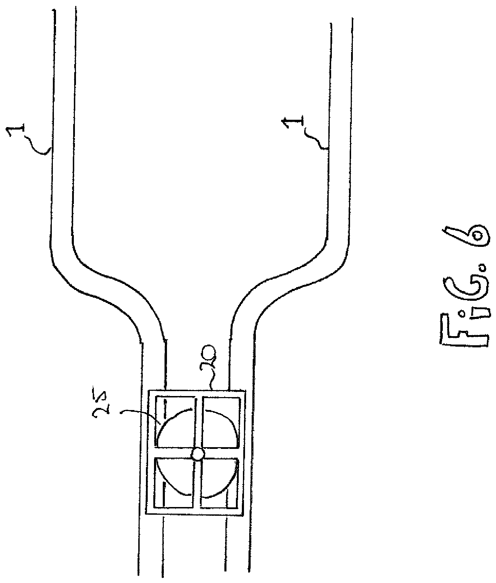

Figure 6 schematically shows a movable King Pin arrangement according to the invention. According to the invention the main frame beams along the length that is used for the slidable engagement with the sub-chassis 20, have a mutual distance that is smaller than the width of the Fifth Wheel of the towing vehicle. This way, the load on the main frame is passed directly to the Fifth Wheel, allowing the sub-chassis to be of a relatively light construction.

### Figure 7

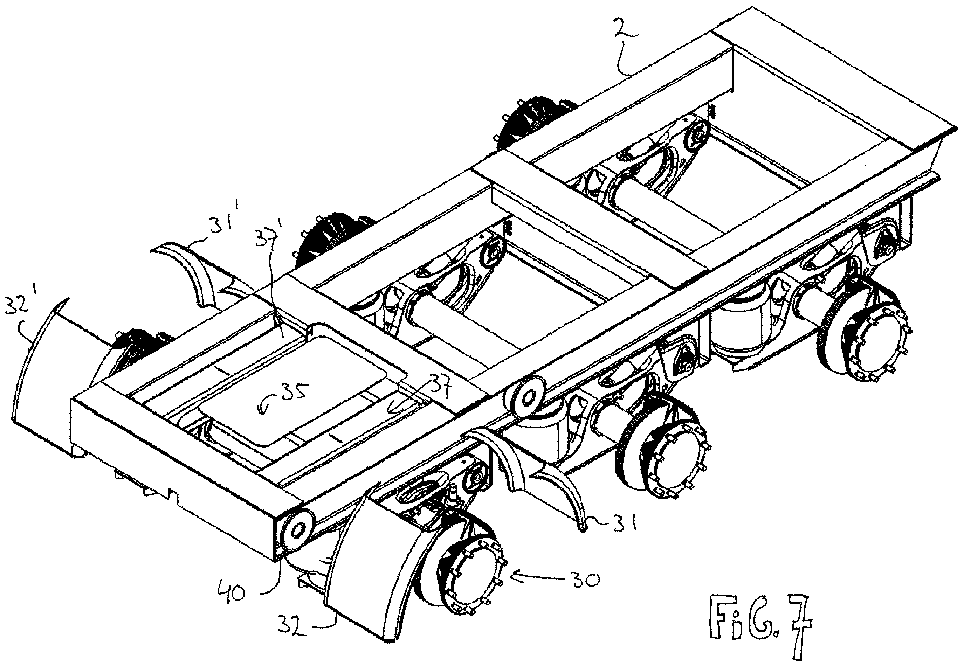

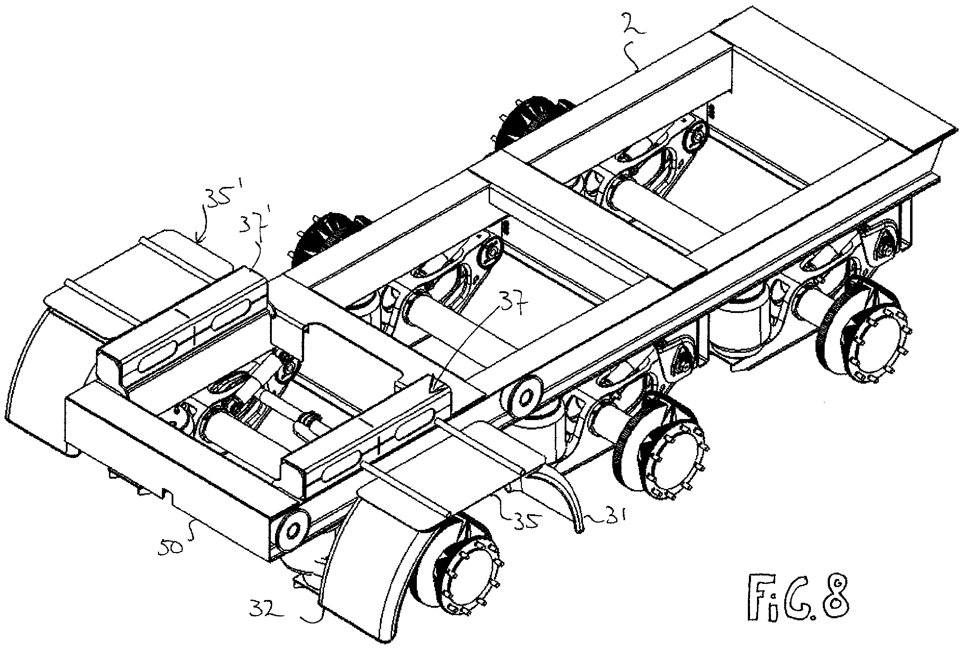

Figure 7 shows an arrangement with a hinged sheet-like member 35 that may close an open fender (31, 32) according to another aspect of the invention. In this embodiment the semi-trailer for comprises a main frame (not shown in figure 7) having two parallel main frame beams being transversely connected, and laterally extending from the main beams arms for supporting freight, the main frame having at its leading end a means for connecting the trailer to a towing vehicle, and at is trailing end a wheeled sub-frame (shown in figure 7) comprising two parallel sub-frame beams 2 that correspond to the respective main frame beams, wherein the wheeled sub-frame is slidably connected to the main frame via wheels 40 to enable extension of the semi-trailer to accommodate freight of various sizes. The sub-frame has three axles with wheels. The trailing end axle 30 is provided with a fender having a top part cutaway to prevent overlaps in height with the arms for supporting freight (arms not shown in figure 7). This leaves fender subparts 31 and 32 that can easily move pass these arms without mechanically interfering with them. According to the invention the sub-frame at the position of the axle 30, for each wheel of the axle (wheels not shown), is provided with a sheet-like member 35 that can hinge with respect to the sub-frame beam between a first position wherein the member is positioned between the sub-frame beams (as shown in figure 7) and a second positon wherein the member is placed in lieu of the top part cutaway from the fender corresponding to the wheel as shown in figure 8. In this particular embodiment the sheet like member 35 is hinged to the sub-frame beam 2 via sub-beam 37.

### Figure 8

Figure 8 shows the same arrangement as figure 7, but having the sheet-like members 35 and 35' hinged to the position wherein these members close the open fenders (31, 32 and 31', 32') that correspond to the wheels of axle 30. In this configuration, the top plane of the sub-beams 37 lie in the same horizontal plane as the top surface of the main frame beams (not shown). This way, the sub-beams 37 can support load in cooperation with the supporting function of the main frame beams.

In an embodiment (not shown), the rear bumper 50 of the sub-frame is slidably connected to the sub-frame to enable extension of the bumper to accommodate freight of various sizes. Advantageously, the rear bumper is slidable when the freight is supported on the rear bumper. Such a sliding arrangement can be accomplished by using an internal mechanic means such as pneumatic or hydraulic cylinders that push the rear bumper outwardly. In an embodiment the mechanic means has a free-wheel option to enable extension of the bumper by using an external force, bypassing the said mechanic means, to slide the bumper with respect to the sub-frame.

### Figure 9

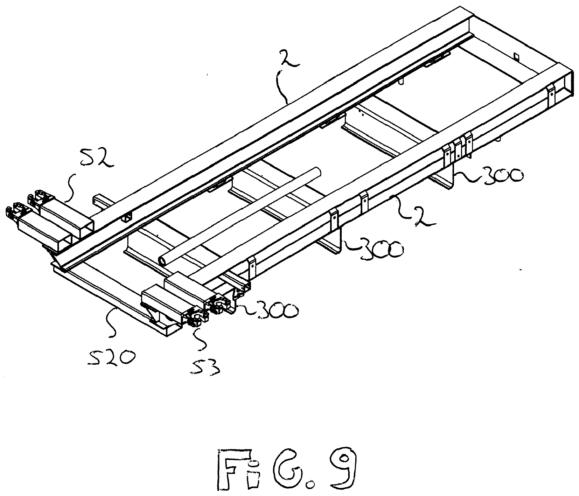

Figure 9 shows a slidable subframe with sub-frame beams 2 for use with a trailer according to the invention. The sub-frame is slidable when freight is supported by the main frame, and is provided on each sub-frame beam, near the leading end of the the sub-frame with two lateral freight support extensions 52. The extensions are situated upstream of the wheels of the sub-frame. The three axles with wheels (not shown) are situated at beams 300. The lateral extensions in this embodiment are provided with twist lock means 53 (capable of receiving actual twist locks). The lateral extensions are mechanically connected in transverse direction by a transverse connection beam 520. In this embodiment the subframe is slidable with respect to the main frame (not shown) having the same sliding arrangement as shown in figure 2, i.e. using singular wheels connected to the main frame.

## Claims

1. A trailer for road haulage, the trailer comprising a main frame having two parallel main frame beams being transversely connected, the main frame having at its leading end a means for connecting the trailer to a towing vehicle, and at is trailing end a wheeled sub-frame, comprising two parallel sub-frame beams that correspond to the respective main frame beams, the sub-frame supporting the main frame movably above a road surface, wherein the wheeled sub-frame is slidably connected to the main frame to enable extension of the trailer to accommodate freight of various sizes, wherein the slidable connection comprises multiple guiding wheels to guide the sub-frame beams with respect to the main frame beams, **characterised in that** each main frame beam has rotatably connected thereto at least two interdistant guiding wheels positioned at different guiding sites along the length of the respective main frame beam, wherein each sub-frame beam has an upper and lower guiding surface for guiding contact with the guiding wheels and wherein at each guiding site at most one guiding wheel is present rotatably engaging the respective guiding surfaces of the corresponding sub-frame beam of the wheeled sub-frame.

2. A trailer according to claim 1, **characterised in that** at least two of the four guiding wheels at the guiding sites of the two main frame beams are flanged wheels, the flanges restricting the lateral movement of the corresponding sub-frame beam.

3. A trailer according to claim 2, **characterised in that** the at least two guiding wheels comprise the trailing end guiding wheel of the first main frame beam and the trailing end guiding wheel of the second main frame beam.

4. A trailer according to any of the preceding claims, **characterised in that** the lower guiding surface is stabilised with a rigid overlay surface, the rigid overlay surface being part of an angled section profile, which profile fittingly engages the sub-frame beam underneath the lower guiding surface.

5. A trailer according to claim 4, **characterised in that** the rigid overlay surface is at least present at a site where the respective guiding wheel resides during haulage of the trailer.

6. A trailer according any of the claims 4 and 5, **characterised in that** the angled section profile is part of a transverse connecting member connecting the two sub-frame beams.

7. A trailer according to any of the claims 4 and 5, **characterised in that** the angled section profile is part of a rigid connection piece to mechanically connect a wheeled axle to the sub-frame.

8. A trailer according to any of the preceding claims, the main frame having at its leading end a Kingpin for connecting the trailer to a Fifth Wheel of a towing vehicle, wherein the Kingpin is movable with respect to the main frame in longitudinal direction, **characterised in that** the Kingpin is movable by being part of a sub-chassis which is operatively connected to the main frame to be able and slide along a predetermined length of the main frame, wherein the main frame beams along the said length have a mutual distance that is smaller than the width of the Fifth Wheel of the towing vehicle.

9. A trailer according to any of the preceding claims, **characterised in that** the sub-frame is slidable when freight is supported by the main frame, wherein the sub-frame is provided on each sub-frame beam with a lateral freight support extensions, the lateral extensions being situated upstream of the wheels of the sub-frame, the lateral extensions optionally being provided with twist locks, and the lateral extensions being mechanically connected in transverse direction by a transverse connection beam.

10. A trailer according to any of the preceding claims, **characterised in that** the sub-frame is provided with a trailing end bumper which bumper is slidably connected to the sub-frame to enable extension of the bumper to accommodate freight of various sizes, **characterised in that** the rear bumper is slidable when the freight is supported on the rear bumper.

11. A trailer for road haulage, the trailer comprising a main frame having two parallel main frame beams being transversely connected, the trailer optionally having at is trailing end a wheeled sub-frame, comprising two parallel sub-frame beams that correspond to the respective main frame beams, the sub-frame supporting the main frame movably above a road surface, wherein the wheeled sub-frame is slidably connected to the main frame to enable extension of the trailer to accommodate freight of various sizes, the main frame having at its leading end a Kingpin for connecting the trailer to a Fifth Wheel of a towing vehicle, wherein the Kingpin is movable with respect to the main frame in longitudinal direction, **characterised in that** the Kingpin is movable by being part of a sub-chassis which is operatively connected to the main frame to be able and slide along a predetermined length of the main frame, wherein the main frame beams along the said length have a mutual distance that is smaller than the width of the Fifth Wheel of the towing vehicle, and **in that** optionally at least one sub-frame beam is provided with a supporting leg that is configurable in vertical direction to support the trailer.

12. A trailer for road haulage, the trailer comprising a main frame having two parallel main frame beams being transversely connected, the main frame having at its leading end a means for connecting the trailer to a towing vehicle, and at is trailing end a wheeled sub-frame, comprising two parallel sub-frame beams that correspond to the respective main frame beams, the sub-frame supporting the main frame movably above a road surface, wherein the wheeled sub-frame is slidably connected to the main frame to enable extension of the trailer to accommodate freight of various sizes, wherein the sub-frame is provided with a trailing end bumper which bumper is slidably connected to the sub-frame to enable extension of the bumper to accommodate freight of various sizes, **characterised in that** the rear bumper is slidable when the freight is supported on the rear bumper.

13. A trailer according to claim 12, wherein the bumper is slidable using a mechanic means that is actuable to slide the bumper with respect to the sub-frame, **characterised in that** the mechanic means has a free-wheel option to enable extension of the bumper by using an external force, bypassing the said mechanic means, to slide the bumper with respect to the sub-frame.
